# EUROPEAN PATENT APPLICATION

(11) **EP 3 498 673 A1**
(43) Date of publication of application: **19.06.2019**
(21) Application number: 17386049.5
(22) Date of filing: 18.12.2017
(51) Int. Cl.: C01B 33/40, C04B 33/13

(54) **MINERAL TREATMENT PROCESS**

(71) Applicant: IMERTECH SAS, 75015 Paris (FR)
(72) Inventor: Vamvounis, Emmanouil, 14564 Kifisia (GR); Zervaki, Monica, 14564 Kifisia (GR); Kapralou, Christina, 14564 Kifisia (GR); Karalis, Thanasis, 14564 Kifisia (GR); Dedeloudis, Christos, 14564 Kifisia (GR)
(74) Representative: Yazitzoglou, Evagelia S.

(57) **Abstract**

A method for treating a smectite clay, a smectite clay obtained by said method and the various uses of the treated smectite clay.

## Description

### TECHNICAL FIELD

The present invention relates generally to a method of treating a smectite clay such as bentonite in order to replace at least some of the monovalent cations present in the smectite clay with bivalent cations. The present invention further relates to smectite clays that may be obtained by this method and to the various uses of these treated smectite clays, for example as a catalyst, for example as a catalyst in the production of dimer acids from monounsaturated fatty acids.

### BACKGROUND

Smectite clays such as bentonite have a smectite mineral structure, namely a 2:1 structure of an octahedral sheet sandwiched between two tetrahedral sheets. Smectite clays have a variable net negative charge, which may be balanced by one or more cations such as sodium, potassium, calcium and magnesium, which are adsorbed externally on interlamellar surfaces. The specific cations present in the smectite clay may vary depending on where the smectite clay was obtained from. However, smectite clay commonly includes a mixture of cations, for example a mixture of bivalent and monovalent cations. It may be desirable for smectite clay to include a specific type of cation for particular uses. For example, where high hydrophilicity is required it may be advantageous to use smectite clays comprising mainly sodium ions. It is therefore desirable to provide alternative and/or improved methods for treating smectite clays to obtain a smectite clay comprising a desired type of cation.

### SUMMARY

In accordance with a first aspect of the present invention there is provided a method for treating a smectite clay, the method comprising:
providing a smectite clay comprising monovalent cations; and
contacting the smectite clay with a bivalent cationic salt in the presence of a solvent;
wherein the bivalent cationic salt is more soluble in the solvent than the corresponding salt of the monovalent cations present in the smectite clay.

In certain embodiments, the bivalent cationic salt is not a chloride. Alternatively or additionally, in certain embodiments, the smectite clay and bivalent cationic salt are contacted in the presence of equal to or less than about 60 wt% solvent based on the total weight of the composition. Alternatively or additionally, in certain embodiments, the smectite clay and bivalent cationic salt are contacted at a pH equal to or less than about 5. Alternatively or additionally, in certain embodiments, the method of treatment occurs simultaneously with acid activation of the smectite clay.

In the method of the first aspect of the present invention at least some of the monovalent cations are replaced by the bivalent cations in the bivalent cationic salt. Thus, the method may increase the ratio of bivalent cations to monovalent cations in the smectite clay. In certain embodiments, all of the monovalent cations are replaced by bivalent cations. Thus, in certain embodiments, the method may form a smectite clay that does not comprise monovalent cations and may, for example, comprise only bivalent cations.

In accordance with a second aspect of the present invention there is provided a smectite clay obtained by and/or obtainable by the method of the first aspect of the present invention.

In accordance with a third aspect of the present invention there is provided a smectite clay having a ratio of bivalent cations to monovalent cations equal to or greater than about 90:10.

In accordance with a fourth aspect of the present invention there is provided the use of a smectite clay according to the second or third aspect of the present invention as a catalyst. In certain embodiments, the smectite clay is used as a catalyst in the production of dimer acids from unsaturated fatty acids, for example monounsaturated fatty acids.

In certain embodiments of any aspect of the present invention the smectite clay is bentonite.

In certain embodiments, the bivalent cationic salt does not comprise chloride and/or does not comprise bromide. In certain embodiments, the bivalent cationic salt does not comprise sulphur.

In certain embodiments, the bivalent cationic salt is a nitrate, acetate, benzoate, bicarbonate, a hydroxide, a halide, a sulphate, an azide, a carbonate, a chromate, a citrate, a phosphate, a formate, a molybdate, a nitrite, an oxalate, an oxide, a permanganate, a selenite or a tungstate. In certain embodiments, the bivalent cationic salt is a calcium nitrate such a calcium nitrate tetrahydrate.

In certain embodiments, the smectite clay and bivalent cationic salt are contacted in the presence of equal to or less than about 60 wt% solvent (e.g. water). In certain embodiments, the smectite clay and bivalent cationic salt are contacted in the presence of equal to or more than about 15 wt% solvent (e.g. water).

In certain embodiments, the pH of the composition formed by contacting the smectite clay with the bivalent cationic salt is equal to or less than about 10. In certain embodiments, the pH of the composition formed by contacting the smectite clay with the bivalent cationic salt is equal to or less than about 5.

In certain embodiments, the smectite clay of the present invention has a ratio of bivalent cations to monovalent cations equal to or greater than about 90:10. In certain embodiments, the smectite clay of the present invention does not comprise monovalent cations. In certain embodiments, the smectite clay comprises only bivalent cations.

Certain embodiments of any aspect of the present invention may provide one or more of the following advantages:
- replacement of monovalent cations in smectite clay with bivalent cations to increase the ratio of bivalent cations to monovalent cations in the smectite clay;
- process can be carried out at a low pH;
- process can be carried out with low quantities of water;
- minimization of sulphur and chloride and bromide content of the product of the process.

The details, examples and preferences provided in relation to any particulate one or more of the stated aspects of the present invention will be further described herein and apply equally to all aspects of the present invention. Any combination of the embodiments, examples and preferences described herein in all possible variations thereof is encompassed by the present invention unless otherwise indicated herein, or otherwise clearly contradicted by context.

### DETAILED DESCRIPTION

The present inventors have surprisingly and advantageously found that it is possible to replace the monovalent cations present in a smectite clay with bivalent cations by contacting the smectite clay with a bivalent cationic salt in the presence of a solvent, which may, for example, be water. The bivalent cationic salt is more soluble in the solvent (e.g. water) than the corresponding salt of the monovalent cations present in the smectite clay in order to drive the cation exchange reaction. There is therefore provided herein a method for treating a smectite clay or a method for replacing monovalent cations present in a smectite clay with bivalent cations or a method for increasing the ratio of bivalent cations to monovalent cations in a smectite clay. In certain embodiments all of the monovalent cations present in the smectite clay are replaced by bivalent cations. In certain embodiments, the treated smectite clay comprises only bivalent cations. Thus, in certain embodiments there is provided herein a method for making a smectite clay comprising only bivalent cations from a smectite clay comprising monovalent cations, for example a smectite clay comprising a mixture of monovalent and bivalent cations.

The term "smectite clay" used herein refers to a material that comprises a clay having a smectite mineral structure, namely a 2:1 structure of an octahedral sheet sandwiched between two tetrahedral sheets. Smectite clays have a variable net negative charge, which may be balanced by one or more cations such as sodium, potassium, calcium, aluminium or magnesium cations, or by hydrogen adsorbed externally on interlamellar surfaces. The smectite clays may comprise a combination of types of cation, for example a mixture of monovalent, bivalent and trivalent cations. The smectite clays may, for example, comprise (e.g. comprise only) a mixture of monovalent and bivalent cations.

For example, the smectite clay may comprise, consist essentially of or consist of montmorillonite, beidellite, nontronite, saponite, hectorite or a combination of one or more thereof. In certain embodiments, the smectite clay comprises, consists essentially of or consists of montmorillonite. Bentonite is a smectite clay comprising mostly montmorillonite. Therefore, in certain embodiments, the smectite clay is bentonite.

The smectite clay to be treated by the methods described herein comprises monovalent cations. In certain embodiments, the smectite clay comprises (e.g. comprises only) a mixture of monovalent, bivalent and trivalent cations. In certain embodiments, the smectite clay comprises (e.g. comprises only) a mixture of monovalent and bivalent cations. In certain embodiments, the smectite clay comprises only monovalent cations (in other words does not comprise any cations that are not monovalent). In certain embodiments, the monovalent cations are selected from sodium cations, potassium cations or a combination thereof. In certain embodiments, the bivalent cations are selected from calcium cations, magnesium cations or a combination thereof. In certain embodiments, the trivalent cations are aluminium cations. In certain embodiments, the smectite clay to be treated by the methods described herein (e.g. bentonite) comprises a mixture of calcium cations and sodium cations. In certain embodiments, the smectite clay to be treated by the methods described herein (e.g. bentonite) comprises a mixture of only calcium cations and sodium cations. In general, reference to cations in the smectite clay refers to exchangeable cations in the smectite clay.

Smectite clay comprising sodium cations (e.g. bentonite) includes both naturally occurring smectite clay and treated smectite clay. For example, cations such as calcium, potassium or aluminium in naturally occurring smectite clay may have been replaced with sodium cations, for example by soda ash activation. This may be referred to as sodium-activated smectite clay. Soda ash activation may, for example, comprise addition of soda ash powder (sodium carbonate) to smectite clay having a moisture content of at least about 20 wt%, for example at least about 22 wt% or at least about 35 wt%, and mixing, for example, by extrusion or kneading. The soda ash activated smectite clay may then be dried and processed (e.g. milled) to a powder having a desired particle size distribution.

When the smectite clay used in certain embodiments of the present invention is obtained from naturally occurring sources, it may be that some mineral impurities will inevitably contaminate the ground material. In general, however, the smectite clay will preferably contain less than 5% by weight, preferably less than 1% by weight of other mineral impurities.

The smectite clay may comprise at least about 70 wt% smectite mineral structure. For example, the smectite clay may comprise at least about 75 wt% or at least about 80 wt% or at least about 85 wt% or at least about 90 wt% or at least about 95 wt% or at least about 96 wt% or at least about 97 wt% or at least about 98 wt% or at least about 99 wt% smectite mineral structure. For example, the smectite clay may comprise up to about 100 wt% smectite mineral structure. For example, the smectite clay may comprise up to about 99 wt% or up to about 98 wt% or up to about 97 wt% or up to about 95 wt% or up to about 90 wt% smectite mineral structure.

The smectite clay may, for example, comprise equal to or less than about 40 wt% moisture. For example, the smectite clay may comprise equal to or less than about 35 wt% or equal to or less than about 30 wt% or equal to or less than about 25 wt% or equal to or less than about 20 wt% or equal to or less than about 15 wt% moisture. Moisture content may, for example, be measured by heating the smectite clay until there is no further change in weight and comparing the weight before and after heating. The smectite clay may, for example, comprise equal to or greater than about 0 wt% moisture. For example, the smectite clay may comprise equal to or greater than about 4 wt% or equal to or greater than about 5 wt% or equal to or greater than about 10 wt% or equal to or greater than about 15 wt% moisture. In particular, the smectite may have a moisture content within this range when it is contacted with the bivalent cationic salt. This may, for example, be determined by ASTM D2216-10 Standard Test Methods for Laboratory Determination of Water (Moisture) Content of Soil and Rock by Mass.

The smectite clay (e.g. bentonite) may, for example, be processed before or after the methods of treatment described herein in order to obtain a desired particle size. Processing may, for example, comprise grinding, milling and/or sieving. The smectite clay may, for example, have from at least about 90 wt% of particles smaller than about 200 mesh (74 microns), for example at least about 92 wt%, for example at least about 94 wt%, for example at least about 95 wt%, for example at least about 96 wt%, for example at least about 98 wt%, for example at least about 99 wt% of particles smaller than about 200 mesh (74 microns).

In the treatment methods described herein, the smectite clay is contacted with a bivalent cationic salt in the presence of a solvent such as water. The contacting may, for example, involve mixing, shaking, kneading and/or extruding. In certain embodiments, the smectite clay and bivalent cationic salt are mixed in the presence of water and the resulting composition comprising the smectite clay and bivalent cationic salt is extruded.

The bivalent cationic salt is any salt containing bivalent cations. The bivalent cationic salt may, for example, be any bivalent cationic salt that is more soluble in the solvent (e.g. water) than the corresponding salt of the monovalent cations in the smectite clay. The corresponding salt of the monovalent cations in the smectite clay refers to the salt that is made when the bivalent cations in the bivalent cationic salt are replaced with the monovalent cations that are present in the smectite clay.

The bivalent cation in the bivalent cationic salt may, for example, be magnesium, calcium or a combination of one or more thereof. For example, the bivalent cation in the bivalent cationic salt may be calcium. The bivalent cation in the bivalent cationic salt may, for example, be a bivalent cation that is present in the smectite clay to be treated;

The bivalent cationic salt may, for example, be a nitrate, an acetate, a benzoate, a bicarbonate, a hydroxide, a halide, a sulphate, an azide, a carbonate, a chromate, a citrate, a phosphate, a formate, a molybdate, a nitrite, an oxalate, an oxide, a permanganate, a selenite or a tungstate. The bivalent cationic salt may, for example, be a nitrate, an acetate, a benzoate, a bicarbonate or a hydroxide. The bivalent cationic salt may, for example, be a nitrate.

The bivalent cationic salt may, for example, be a hydrate (an inorganic salt containing water molecules combined in a definite ratio as an integral part of the crystal). For example, the hydrate may be a hemi-, mono-, sesqui-, di-, tri-, tetra-, penta-, hexa-, hepta-, octa-, nona-, deca-, undeca- or dodeca- hydrate. For example, the hydrate may be a tetrahydrate.

The bivalent cationic salt may not comprise chloride anions. The bivalent cationic salt may, for example, not comprise bromide anions. The bivalent cationic salt may, for example, not comprise halide anions. The bivalent cationic salt may not comprise chloride atoms and/or bromine atoms and/or halogen atoms (including, for example, perchlorate, chlorate, bromate and iodate anions). The bivalent cationic salt may, for example, not comprise any cations or anions that include one or more sulphur atoms (including, for example, sulphide, sulphate, dithionite, sulphite, tetrathionate, thiosulphate anions).

In certain embodiments, the bivalent cationic salt is calcium nitrate, for example calcium nitrate tetrahydrate.

The bivalent cationic salt may, for example, be in the form of a dry powder. Alternatively, the bivalent cationic salt may be in the form of a solution or suspension.

The stoichiometric amount of bivalent cationic salt required to replace the monovalent cations in the smectite clay with the bivalent cations present in the bivalent cationic salt may be calculated. For example, the concentration of monovalent cations present in the smectite clay may be calculated using the silver thiourea cation exchange capacity method and the stoichiometric amount of bivalent cations required to replace the calculated concentration of monovalent cations may then be calculated. The bivalent cationic salt may be used in an amount equal to or greater than about 90 % of the stoichiometric amount of bivalent cations required to replace the monovalent cations in the smectite clay. For example, the bivalent cationic salt may be used in an amount equal to or greater than about 92 % or equal to or greater than about 94 % or equal to or greater than about 95 % or equal to or greater than about 96 % or equal to or greater than about 98% or equal to or greater than about 99 % or equal to or greater than about 100 % of the stoichiometric amount of bivalent cations required to replace the monovalent cations in the smectite clay. For example, the bivalent cationic salt may be used in an amount equal to or less than about 150 % or equal to or less than about 140 % or equal to or less than about 130 % or equal to or less than about 120 % or equal to or less than about 110 % or equal to or less than about 100 % of the stoichiometric amount of bivalent cations required to replace the monovalent cations in the smectite clay.

The bivalent cationic salt may, for example, be used in an amount equal to or less than about 50 % based on the total weight of the smectite clay. For example, the bivalent cationic salt may be used in an amount equal to or less than about 45 wt% or equal to or less than about 40 wt% or equal to or less than about 35 wt% or equal to or less than about 30 wt% or equal to or less than about 25 wt% or equal to or less than about 20 wt% or equal to or less than about 15 wt% or equal to or less than about 10 wt% based on the total weight of the smectite clay. For example, the bivalent cationic salt may be used in an amount equal to or less than about 9 wt% or equal to or less than about 8 wt% or equal to or less than about 7 wt% or equal to or less than about 6 wt% or equal to or less than about 5 wt% or equal to or less than about 4 wt% based on the total weight of the smectite clay. For example, the bivalent cationic salt may be used in an amount equal to or greater than about 0.5 wt% or equal to or greater than about 1 wt% or equal to or greater than about 1.5 wt% or equal to or greater than about 2 wt% based on the total weight of the smectite clay. For example, the bivalent cationic salt may be used in an amount ranging from about 0.5 wt% to about 50 wt% or from about 0.5 wt% to about 30 wt% or from about 0.5 wt% to about 10 wt% or from about 0.5 wt% to about 5 wt% based on the total weight of the smectite clay.

The smectite clay is contacted with a bivalent cationic salt in the presence of a solvent such as water. The solvent present in when the smectite clay is contacted with a bivalent cationic salt refers to the total amount of solvent in the composition comprising the smectite clay and the bivalent cationic salt. The total amount of water in the composition refers to the free water in the composition (not water in the crystalline phases of the mineral or salt). This may be measured according to ASTM D2216 - 10, standard test methods for laboratory determination of water (moisture) content of soil and rock by mass.

The total amount of solvent present when the smectite clay is contacted with the bivalent cationic salt may, for example, be an amount sufficient to dissolve the bivalent cationic salt and/or the corresponding monovalent cationic salt that is formed. For example, the total amount of solvent present when the smectite clay is contacted with the bivalent cationic salt may be no more than about 50 % more, for example no more than about 40 % more, for example no more than about 30 % more, for example no more than about 20 % more, for example no more than about 10 % more, than the amount required to dissolve the bivalent cationic salt and/or the corresponding monovalent cationic salt that is formed.

For example, the smectite clay and bivalent cationic salt may be combined in the presence of equal to or less than about 60 wt% solvent (e.g. water) based on the total weight of the composition. In other words, after the smectite clay and bivalent cationic salt are contacted, the composition comprising the smectite clay and bivalent cationic salt may comprise equal to or less than about 60 wt% solvent based on the total weight of the composition. For example, the smectite clay and bivalent cationic salt may be combined in the presence of equal to or less than about 55 wt% or equal to or less than about 50 wt% or equal to or less than about 45 wt% or equal to or less than about 40 wt% or equal to or less than about 39 wt% or equal to or less than about 38 wt% or equal to or less than about 37 wt% or equal to or less than about 36 wt% or equal to or less than about 35 wt% solvent (e.g. water). For example, the smectite clay and bivalent cationic salt may be combined in the presence of equal to or greater than about 4 wt% solvent (e.g. water) based on the total weight of the composition. For example, the smectite clay and bivalent cationic salt may be combined in the presence of equal to or greater than about 10 wt% or equal to or greater than about 15 wt% or equal to or greater than about 16 wt% or equal to or greater than about 17 wt% or equal to or greater than about 18 wt% or equal to or greater than about 19 wt% or equal to or greater than about 20 wt% or equal to or greater than about 21 wt% or equal to or greater than about 22 wt% or equal to or greater than about 23 wt% or equal to or greater than about 24 wt% or equal to or greater than about 25 wt% or equal to or greater than about 26 wt% or equal to or greater than about 27 wt% or equal to or greater than about 28 wt% or equal to or greater than about 29 wt% or equal to or greater than about 30 wt%. For example, the smectite clay and bivalent cationic salt may be combined in the presence of about 4 wt% to about 60 wt% or from about 15 wt% to about 60 wt% or from about 20 wt% to about 50 wt% or from about 20 wt% to about 40 wt% solvent (e.g. water) or from about 25 wt% to about 40 wt% solvent (e.g. water) or from about 30 wt% to about 40 wt% solvent (e.g. water) or from about 25 wt% to about 35 wt% solvent (e.g. water) or from about 30 wt% to about 35 wt% solvent (e.g. water). In certain embodiments, the smectite clay and bivalent cationic salt is combined in the presence of equal to or greater than about 30 wt% solvent (e.g. water).

In certain embodiments, the solvent (e.g. water) may be added to one or more of the starting materials (e.g. the smectite clay and/or the bivalent cationic salt) in the desired amount prior to contacting the smectite clay and bivalent cationic salt. For example, the smectite clay and/or the bivalent cationic salt may be sprayed with the solvent (e.g. water) prior to contacting the smectite clay and bivalent cationic salt. In certain embodiments, after the smectite clay and bivalent cationic salt have been combined, the solvent (e.g. water) may be added to the composition comprising the smectite clay and bivalent cationic salt in the desired amount. In certain embodiments, the naturally occurring smectite clay may already comprise a suitable amount of water.

After the smectite clay and bivalent cationic salt are contacted, the composition comprising the smectite clay and bivalent cationic salt may, for example, have a pH equal to or less than about 10. In other words the smectite clay and bivalent cationic salt may be contacted at a pH equal to or less than about 10. For example, the composition comprising the smectite clay and bivalent cationic salt may have a pH equal to or less than about 9.5 or equal to or less than about 9 or equal to or less than about 8.5 or equal to or less than about 8 or equal to or less than about 7.5 or equal to or less than about 7.

For example, the composition comprising the smectite clay and bivalent cationic salt may have a pH equal to or greater than about 5 or equal to or greater than about 5.5 or equal to or greater than about 6 or equal to or greater than about 6.5 or equal to or greater than about 7. For example, after the smectite clay and bivalent cationic salt are contacted, the composition comprising the smectite clay and bivalent cationic salt mayhave a pH ranging from about 5 to about 10 or from about 6 to about 9 or from about 6 to about 8.

In certain embodiments, the bentonite treatment method described herein may take place at the same time as acid-activation of the smectite clay (a process whereby the smectite clay is heated in the presence of an acid, for example a strong acid, for example an acid that is at least about 95 %, for example 100 % ionized in water). The acid may, for example, be hydrochloric acid, sulphuric acid, hydroiodic acid, hydrobromic acid, perchloric acid or nitric acid. The acid may, for example, be used in a concentration of at least about 0.5 M and/or up to about 5 M. The acid may, for example, be combined with the smectite clay or bivalent cationic salt before the smectite clay and bivalent cationic salt are contacted. The acid may, for example, be contacted with a composition comprising the smectite clay and the bivalent cationic salt. The smectite clay and acid composition (and bivalent cationic salt where the acid acitivation takes place at the same time as the methods described herein) may, for example, be heated to a temperature up to about 200°C, for example up to about 150°C, for example up to about 140°C, for example up to about 130°C, for example up to about 120°C, for example up to about 110°C, for example up to about 100°C. For example, the smectite clay and acid composition (and bivalent cationic salt where the acid acitivation takes place at the same time as the methods described herein) may be heated to a temperature of at least about 50°C or at least about 60°C or at least about 70°C or at least about 80°C or at least about 90°C or at least about 100°C. Thus, in certain embodiments the smectite clay and bivalent cationic salt may be contacted at a pH of less than about 5. Thus, after the smectite clay and bivalent cationic salt are contacted, the composition comprising the smectite clay and bivalent cationic salt may, for example, have a pH equal to or less than about 5 or equal to or less than about 4.5 or equal to or less than about 4 or equal to or less than about 3.5 or equal to or less than about 3 or equal to or less than about 2.5 or equal to or less than about 2 or equal to or less than about 1.5. For example, the composition comprising the smectite clay and bivalent cationic salt may have a pH equal to or greater than about 0 or equal to or greater than about 0.5 or equal to or greater than about 1. For example, the smectite clay and bivalent cationic salt may be contacted at a pH ranging from about 0 to about 5 or from about 0 to about 4 or from about 0 to about 3 or from about 0 to about 2.

After the smectite clay and bivalent cationic salt have been contacted, the resulting composition comprising the smectite clay and bivalent cationic salt may be left for a period of time to allow the monovalent cations present in the smectite clay to be exchanged with the bivalent cations present in the bivalent cationic salt. This period of time may, for example, be at least about 1 hour. For example, this period of time may be at least about 2 hours or at least about 3 hours or at least about 4 hours or at least about 5 hours or at least about 6 hours. For example, this period of time may be up to about 48 hours or up to about 36 hours or up to about 24 hours or up to about 18 hours or up to about 12 hours. The resulting composition comprising the smectite clay and bivalent cationic salt may, for example, be left at a temperature ranging from about 15°C to about 25°C, for example from about 18°C to about 24°C, for example from about 20°C to about 22°C.

The resulting composition comprising the smectite clay and the bivalent cationic salt may, for example, be dried and/or processed (e.g. by grinding) to a desired particle size.

The resulting composition may, for example, be dried to a moisture content equal to or less than about 20 wt% or equal to or less than about 15 wt% or equal to or less than about 14 wt% or equal to or less than about 13 wt% or equal to or less than about 12 wt%. For example, the resulting composition may be dried to a moisture content equal to or greater than about 2 wt% or equal to or greater than about 5 wt% or equal to or greater than about 10 wt%.

There is also disclosed herein the treated smectite clays that may be obtained by and/or may be obtainable by the methods disclosed herein. There is also disclosed herein a smectite clay having a ratio of bivalent cations to monovalent cations equal to or greater than about 90:10.

The treated smectite clays disclosed herein may, for example, have a ratio of bivalent cations to monovalent cations equal to or greater than about 90:10. For example, the treated smectite clays may have a ratio of bivalent cations to monovalent cations equal to or greater than about 92:8 or equal to or greater than about 94:6 or equal to or greater than about 95:5 or equal to or greater than about 96:4 or equal to or greater than about 98:2 or equal to or greater than about 99:1. These ranges includes smectite clays that do not comprise monovalent cations. In certain embodiments, the treated smectite clay does not comprise monovalent cations. In other words, the monovalent cations present in the smectite clay before the methods described herein were performed are all exchanged. In certain embodiments, the treated smectite clay comprises only bivalent cations (e.g. calcium and/or magnesium cations). In other words, all non-bivalent cations present in the smectite clay before the methods described herein were performed are exchanged with bivalent cations. In certain embodiments, the only bivalent cations present in the treated smectite clay are the bivalent cations present in the bivalent cationic salt used in the methods described herein. In other words, all cations present in the smectite clay were replaced with the bivalent cations in the bivalent cations salt or the bivalent cations present in the smectite clay before treatment were the same as the bivalent cations present in the bivalent cationic salt.

There is further disclosed herein the various uses of the treated smectite clays described herein, for example the treated smectite clays obtained by and/or obtainable by the methods described herein.

The use may be any use where it is preferable for the smectite clay to include more bivalent cations than monovalent cations. For example, the use may be any use where it is preferable to use a non-swelling smectite clay such as in pharmaceutical and animal feed products. The smectite clays may, for example, be used as a filler and/or a binder and/or an absorbent (e.g. to absorb one or more toxins) and/or as a desiccant.

In certain embodiments, the treated smectite clays described herein may be used in a method of clarification of a liquid such as wine or fruit juice.

In certain embodiments, the treated smectite clays described herein may be used in a method of bleaching oil.

In certain embodiments, the treated smectite clays described herein may be used as a binder in the production of metal castings.

In certain embodiments, the treated smectite clays described herein may be used in a method of fulling wool.

In certain embodiments, the treated smectite clays may be incorporated into pharmaceutical products and/or into animal feed products and/or cat litter products and/or ceramic products (e.g. as a glaze for a ceramic product) and/or cosmetic products and/or dessicant product and/or into a wool prodcut and/or a herbicide and/or a pesticide and/or an insecticide and/or a tape and joint product and/or bleaching earth product suitable for oil bleaching.

In certain embodiments, the treated smectite clays may be used as a catalyst. For example, the treated smectite clays may be used as a catalyst in the production of dimer acids from unsaturated fatty acids (e.g. monounsaturated fatty acids). Treated smectite clays having a particularly high ratio of bivalent cations to monovalent cations may be particularly useful for this application, for example providing a higher dimerization yield.

The fatty acids used in the production of dimer acids may, for example, be obtained from natural sources such as tall oil, soybean oil and rapeseed oil. The dimer acids may then be used in multiple applications, for example to produce polymers, plasticizers, printing ink, resins, coatings, detergents, surfactants, person care products, adhesives and waxes. For example, the products derived from dimer acids may be nonreactive polyamide resins used in solvents, adhesives and printing inks, or reactive polyamide resins used in marine and construction coatings and adhesives, or oilfield chemicals such as corrosion and scale inhibitors, wetting agents, surfactants and demulsifiers.

### EXAMPLES

A natural mixed-cation bentonite (comprising sodium, potassium, magnesium and calcium cations) in the exchangeable positions was sprinkled with water to give a moisture content of 30 wt% and then manually mixed with calcium nitrate tetrahydrate in the form of a fine powder. The amount of calcium nitrate tetrahydrate was calculated by determining the concentration of monovalent exchangeable cations determined by the silver thiourea cation exchange capacity method and using the stoichiometric amount that provides a calcium concentration corresponding to 100% of the concentration of exchangeable sodium and potassium ions. The paste was then extruded in a laboratory extruder twice and left at room temperature for at least 2 hours. The resulting product was then dried to a moisture content of 12 wt% and was ground to a fineness of 10 to 12 % of particles greater than 200 mesh.

The success of the treatment process was validated by measuring the viscosity of the product according to A.P.I (Specification for Drilling - Fluid Materials API Specification 13A (Spec 13A) 16th Edition, February 2004, ISO 13500:1998 (Modified)), water absorption (according to ASTM 946-83 "Standard method for water absorption of bentonite, porous plate method") and free swelling index (according to ASTM D 5890 - 95 "Standard test method for swell index of clay mineral components of geosynthetic clay liners"). The results are shown in Table 1 below.

**Table 1.**

| | **Pre-treated bentonite** | **Treated bentonite** |
|---|---|---|
| | | |
| **Water absorption (%)** | 542 | 254 |
| **Swelling index (mL/2g)** | 14 | 9 |
| **Fann reading @ 600 rpm** | 6.5 | 5 |
| **Fann reading @ 300 rpm** | 3.5 | 3 |

Bentonite that contains sodium ions in the exchangeable positions has the ability to absorb more water and thus shows higher swelling index. Also, the viscosity (Fann readings at 600 and 300 rpm) of a slurry of bentonite comprising sodium cations is higher than the viscosity of a slurry where at least some sodium ions have been exchanged. Table 1 shows that the treated bentonite has lower water absorption, swelling and apparent viscosity compared to the raw material and thus proves that the sodium ions have been replaced by calcium ions in the exchangeable positions.

The foregoing broadly describes certain embodiments of the present invention without limitation. Variations and modifications as will be readily apparent to those skilled in the art are intended to be within the scope of the present invention as defined in and by the appended claims.

## Claims

1. A method for treating a smectite clay, the method comprising:
providing a smectite clay comprising monovalent cations; and
contacting the smectite clay with a bivalent cationic salt in the presence of a solvent;
wherein the bivalent cationic salt is more soluble in the solvent than the corresponding salt of the monovalent cations present in the smectite clay; and
wherein the bivalent cationic salt is not a chloride and/or the smectite clay and bivalent cationic salt are contacted in the presence of equal to or less than about 60 wt% solvent based on the total weight of the composition and/or the method of treatment occurs simultaneously with acid activation of the smectite clay.

2. The method of claim 1, wherein the smectite clay comprises a mixture of monovalent and bivalent cations.

3. The method of claim 1 or 2, wherein the smectite clay is bentonite.

4. The method of claim 2 or 3, wherein the bivalent cations in the smectite clay are calcium, magnesium or a combination thereof.

5. The method of any preceding claim, wherein the solvent is water.

6. The method of any preceding claim, wherein the monovalent cations in the smectite clay are sodium, potassium or a combination thereof.

7. The method of any preceding claim, wherein the bivalent cation in the bivalent cationic salt is a bivalent cation that is present in the smectite clay to be treated.

8. The method of any preceding claim, wherein the bivalent cationic salt is a calcium salt.

9. The method of any preceding claim, wherein the bivalent cationic salt is a nitrate, an acetate, a benzoate, a bicarbonate, a hydroxide, a halide, a sulphate, an azide, a carbonate, a chromate, a citrate, a phosphate, a formate, a molybdate, a nitrite, an oxalate, an oxide, a permanganate, a selenite or a tungstate.

10. The method of any preceding claim, wherein the bivalent cationic salt is a calcium nitrate, for example calcium nitrate tetrahydrate.

11. The method of any preceding claim, wherein the bivalent cationic salt is not a chloride and/or is not a bromide and/or is not a halide and/or does not comprise sulphur.

12. The method of any preceding claim, wherein the bivalent cationic salt is used in an amount equal to or greater than about 90 % of the stoichiometric amount required to replace the monovalent cations in the smectite clay with the bivalent cations in the salt.

13. The method of any preceding claim, wherein the bivalent cationic salt is used in an amount equal to or greater than the stoichiometric amount required to replace the monovalent cations in the smectite clay with the bivalent cations in the salt.

14. The method of any preceding claim, wherein the bivalent cationic salt is used in an amount equal to or less than about 50 %, for example equal to or less than about 10 %, based on the total weight of the smectite clay.

15. The method of any preceding claim, wherein the composition comprising the smectite clay and the bivalent cationic salt has a pH equal to or less than about 10, for example equal to or less than about 5.

16. The method of any preceding claim, wherein the smectite clay and the bivalent cationic salt are contacted in the presence of equal to or greater than about 15 wt% solvent.

17. The method of any preceding claim, wherein the smectite clay and the bivalent cationic salt are contacted in the presence of equal to or less than about 60 wt% solvent.

18. The method of any preceding claim, wherein the ratio of bivalent cations to monovalent cations in the treated smectite clay is equal to or greater than about 90:10.

19. The method of any preceding claim, wherein the treated smectite clay does not comprise monovalent cations.

20. The method of any preceding claim, wherein the treated smectite clay comprises only bivalent cations.

21. The method of any preceding claim, wherein the only bivalent cations present in the treated smectite clay are the bivalent cations present in the bivalent cationic salt that was contacted with the smectite clay.

22. A smectite clay obtained by and/or obtainable by the method of any one of claims 1 to 21.

23. A smectite clay having a ratio of bivalent cations to monovalent cations equal to or greater than about 90:10.

24. The smectite clay of claim 23, wherein the smectite clay does not comprise monovalent cations.

25. The smectite clay of claim 23 or 24, wherein the smectite clay comprises only bivalent cations.

26. The smectite clay of any of claims 23 to 25, wherein the bivalent cations in the smectite clay are calcium, magnesium or combinations thereof.

27. The smectite clay of any of claims 23 to 26, wherein the monovalent cations in the smectite clay are sodium, potassium or combinations thereof.

28. The smectite clay of any of claims 23 to 27, wherein the smectite clay is bentonite.

29. Use of a smectite clay of any of claims 22 to 28 as a catalyst.

30. The use of claim 29, wherein the smectite clay is used as a catalyst in the production of dimer acids from unsaturated fatty acids.
